# EUROPÄISCHE PATENTSCHRIFT

(11) **EP 0 500 979 B1**
(45) Veröffentlichungstag und Bekanntmachung des Hinweises auf die Patenterteilung: **12.06.1996**
(21) Anmeldenummer: 91102870.2
(22) Anmeldetag: 27.02.1991
(51) Int. Cl.: G01N 27/404

(54) **Messgerät zum Nachweis von Gasen mit einem elektrochemischen Sensor und variabler Diffusionssperre**
Gas detecting device with an electrochemical sensor and a variable diffusion barrier
Dispositif de détection de gaz avec un capteur électrochimique et une barrière de diffusion variable

(43) Veröffentlichungstag der Anmeldung: 02.09.1992
(73) Patentinhaber: Drägerwerk Aktiengesellschaft, D-23542 Lübeck (DE)
(72) Erfinder: Maurer, Christoph, W-2407 Bad Schwartau (DE); Matthiessen, Hans, W-2407 Bad Schwartau (DE)

(56) Entgegenhaltungen:
- DE-A- 2 911 548
- DE-B- 2 625 895
- GB-A- 2 164 156

## Beschreibung

Die Erfindung betrifft ein Meßgerät zum Nachweis von Gasen mit Hilfe eines elektrochemischen Sensors, dessen Elektrolytkammer mit ihren Meßelektroden gegenüber der Umgebung von einer Diffusionsmembran abgeteilt ist, welcher eine mit mindestens einer in ihrer Durchlässigkeit veränderbaren Diffusionsöffnung versehene Diffusionssperre vorgelagert ist.

Aus der DE-B-26 25 895 ist eine Vorrichtung zur Probenahme eines Gases zu dessen Konzentrationsbestimmung bekanntgeworden, bei der eine Blende mit zwei verschieden großen Öffnungen vor die wirksame Oberfläche des gassensitiven Körpers geschoben wird.

Die GB-A-21 64 156 beschreibt den Aufbau eines elektrochemischen Sensors mit einer Elektrolytkammer, zwei Meßelektroden, einer Diffusionsmembran, einer Gegenelektrode und einer Referenzelektrode.

Bei einem derartigen Meßgerät und zugehörigem elektrochemischen Sensor nach der DE-OS 29 11 548 ist die meßempfindliche Oberfläche des Sensors von einer auswechselbaren Kappe abgedeckt, in welcher mehrere Durchlaßöffnungen eingebracht sind, durch die das nachzuweisende Gas zur Diffusionsmembran hindurchtritt und einer Messung zugänglich wird. Die Kappe wirkt somit als Diffusionssperre, die je nach Konzentration des nachzuweisenden Gases ausgewechselt werden muß, um eine Überlastung des Sensors bei erhöhten Konzentrationen zu verhindern. Dazu steht eine Anzahl von Diffusionssperren mit unterschiedlicher Menge an Diffusionsöffnungen und/oder unterschiedlichen Querschnitten der Diffusionsöffnungen zur Verfügung. Muß der Meßbereich geändert werden, weil die Menge des nachzuweisenden Gases entweder unterhalb oder oberhalb der Nachweisgrenze des gerade betrachteten Meßbereichs liegt, müssen die entsprechenden Diffusionssperren ausgewechselt werden. Die untere Grenze des Meßbereiches entspricht der Nachweisgrenze, die obere Grenze des Meßbereichs ist bei den jeweilig eingesetzten Diffusionssperren durch die Menge des antransportierten Nachweisgases gegeben, welche noch durch die Diffusionsöffnungen hindurchtreten kann. Übersteigt diese antransportierte Menge das Diffusionsvermögen der Diffusionssperre, zeigt das Meßgerät einen zu niedrigen Meßwert an. Darüber hinaus verhält sich dann die Kennlinie - Konzentration gegen Meßsignal - nicht mehr linear.

Bei dem bekannten Gerät ist es von Nachteil, daß die Anpassung an die unterschiedlichen Meßbereiche von Hand durchgeführt werden muß, so daß jedes Mal ein Eingriff an dem Sensor erfolgt, und darüber hinaus wird ein erforderlicher Wechsel erst dann erkennbar, wenn der Meßbereich schon überschritten ist. Diese beiden Erfordernisse unterbrechen die Meßbereitschaft des Meßgerätes und machen es dadurch für eine wirksame Anzeige zu langsam. Auf schnelle Konzentrationsänderungen kann der Sensor bei Überschreitung des jeweiligen Meßbereiches kein aussagefähiges Signal liefern, ohne daß die Diffusionssperre vorher ausgewechselt wurde.

Der vorliegenden Erfindung liegt die Aufgabe zugrunde, ein Meßgerät der genannten Art so zu verbessern, daß der Sensor während des Betriebs ohne äußeren Eingriff in seiner Empfindlichkeit unterschiedlichen Meßbereichen anpaßbar ist und in seiner Ansprechgeschwindigkeit schneller wird.

Die Lösung der Aufgabe nach Anspruch 1 erfolgt dadurch, daß die Diffusionsöffnungen gleichzeitig mehr oder weniger mit einer ihnen zugeordneten Ventileinrichtung verschließbar sind, die zur Veränderung der Arbeitsposition des jeweiligen zu betätigenden Ventils vor der Öffnung über einen Ventilantrieb an einen Meßwertkomparator angeschlossen ist.

Gemäß dem unabhängigen Anspruch 4 erfolgt die Lösung der Aufgabe dadurch, daß die einzige Diffusionsöffnung durch eine vor dieser durch den Ventilantrieb verschiebbar angeordnete Blende abdeckbar und kontinuierlich veränderbar ist, wobei zur Veränderung der Arbeitsposition der Blende der Ventilantrieb an einen komparator angeschlossen ist.

Der Vorteil der Erfindung ist darin zu sehen, daß das vom Sensor gelieferte Meßsignal dem Komparator die notwendige Information gibt, damit er entscheiden kann, ob der Meßbereich unterhalb oder oberhalb eines ihm eingegebenen Grenzwertbereichs liegt. Wird dieser Grenzwertbereich überschritten, wird die Diffusionsöffnung entsprechend vergrößert, um dem erhöhten Angebot an nachzuweisendem Gas eine größere Öffnung der Diffusionssperre anzubieten. Die Veränderbarkeit der Diffusionsöffnungen kann entweder in Stufen erfolgen, indem einzelne oder mehrere Ventile geöffnet oder geschlossen werden, oder es liegt nur eine einzige Diffusionsöffnung vor, die jedoch genügend groß gehalten ist und welche über eine verschiebbare Blende kontinuierlich verkleinert oder vergrößert und sogar geschlossen werden kann. Je nach Gesamtöffnungsquerschnitt der Diffusionsöffnungen liegt dem Nachweissensor eine andere Meßkennlinie zugrunde. Durch die automatische, vom Meßwert über den Komparator gesteuerte Beschaltung der Ventileinrichtung ist es möglich, je nach erforderlichem Meßbereich auf die zugehörige Sensorkennlinie überzuwechseln und den Sensor automatisch auf der für den Meßbereich geeigneten Kennlinie zu betreiben. Für den Fall, daß mehrere Einzelventile geschaltet werden, ergibt sich somit eine auswählbare Kennlinienschar, und im Fall der durch eine Blende kontinuierlich veränderbaren einzigen Diffusionsöffnung ergibt sich gewissermaßen ein Kennlinienkontinuum, in welchem der Sensor betrieben werden kann. Somit erhält man ein schnelles, auf Konzentrationsänderungen des Meßgases automatisch reagierendes Meßgerät mit einem weit gespannten Einsatzbereich.

Stattet man den Komparator mit einem Sollwertgeber aus, der in Rückkopplungsschaltung mit dem Ventilantrieb verbunden ist, wird die Veränderung der Diffusionsöffnungen derart gesteuert, daß dieser Sollwert immer von dem Sensor eingehalten wird. Sinkt daher der Konzentrationswert des nachzuweisenden Gases, was zu einem Absinken des Meßwertes unterhalb des Sollwertes führen würde, werden die Öffnungen so lange vergrößert, bis der Sensor einen dem Sollwert entsprechenden Meßwert liefert. Erfolgt dies auch bei vollständig geöffneter Diffusionssperre nicht, kann durch eine entsprechende Anzeigeeinheit dieser Zustand angezeigt werden. Steigt im anderen Falle die Konzentration des nachzuweisenden Gases so hoch, daß der eingestellte Sollwert überschritten wird, wird eine entsprechende Anzahl von Diffusionsöffnungen verschlossen oder die Blende schiebt sich weiter über die einzige Diffusionsöffnung vor, so lange bis das Meßsignal des Sensors mit dem Sollwert übereinstimmt. Eine derartige Anordnung macht es möglich, daß schon geringe Abweichungen von dem Sollwert durch eine entsprechende Gegensteuerung, die sich auf die Größe der Diffusionsöffnungen in der Diffusionssperre auswirkt, kompensiert, so daß entweder die entsprechende Anzahl der geöffneten bzw. geschlossenen Ventile oder der von der Blende zum Öffnen oder zum Schließen der einzigen Öffnung zurückgelegte Weg als ein Maß für die vorherrschende Konzentration an nachzuweisenden Gas ergibt. Ein derartig beschalteter Sensor spricht auf sich ändernde Konzentrationswerte sehr schnell an, obwohl er von seinen elektrochemischen Eigenschaften her gesehen im Vergleich dazu durchaus langsam sein kann, bis er den zugehörigen Sättigungsmeßwert erreichen würde. Denn zum Erhalten eines Meßwertes braucht nicht mehr so lange gewartet zu werden, bis der Sensor seinen Sättigungsmeßwert erreicht, sondern die gesamte Meßgerätanordnung regelt unmittelbar auf den eingestellten Meßsignalsollwert zurück. Eine besonders günstige Anwendung für eine derartige Schaltungsanordnung ergibt sich darin, daß zum Schutz des Sensors bei dessen Einschalten zunächst die kleinste Diffusionsöffnung zur Prüfung freigegeben wird, ob überhaupt das nachzuweisende Gas vorliegt. Liegt es vor, wird entsprechend dem Meßsignal die Diffusionssperre mehr oder weniger geöffnet. Liegt kein Gas vor oder ist das Meßsignal unterhalb einer Anzeigeschwelle, kann der maximale Öffnungsquerschnitt der Diffusionssperre freigelegt werden, um beim Auftreten von Meßgas den Öffnungsquerschnitt schnell so weit zu verringern, daß der vorgegebene Sollwert des Meßsignals erreicht wird.

Es ist zweckmäßig, die Öffnungen der Diffusionssperre als Ventilsitze unterschiedlichen Querschnitts auszubilden, welche mittels eines von dem Ventilantrieb getrennt ansteuerbaren Ventiltellers verschließbar sind. Auf diese Weise erhält man eine Diffusionssperre, die unter Beanspruchung geringstmöglichen Totraumes unmittelbar vor die Diffusionsmembran angeordnet werden kann. Durch ausgewählte Abstufung der Querschnittsöffnungen, zum Beispiel in binärer Abstufung, ist es möglich, eine sehr genaue und fein abgestufte Kennlinienschar zu erreichen, die bei geeigneter Kombination von geschlossenen bzw. geöffneten Ventilen sicher ausgewählt werden können.

Eine weitere zweckmäßige Ausführungsform der Diffusionssperre besteht darin, daß entweder eine einzige oder auch mehrere einzele Diffusionsöffnungen von einer verschiebbar angeordneten Blende abgedeckt werden können. Je nach Veränderung des Meßsignals wird eine mehr oder weniger größere Anzahl von Diffusionsöffnungen durch die Blende abgedeckt, oder eine einzige vorhandene Diffusionsöffnung wird in ihrem Querschnitt mehr oder weniger freigegeben.

Eine besonders schnelle Ansteuerungsmöglichkeit der Ventilteller ist dadurch gegeben, daß sie als ein aus Piezokeramik hergestelltes Verschlußelement ausgebildet sind, an welches ein elektrischer Piezoantrieb als Ventilantrieb angeschlossen ist. Derartig ausgeführte Diffusionsöffnungen haben den Vorteil, daß sie als besonders kleine und unter Umständen zweckmäßig mikro-strukturierte Keramikteile ausgebildet sein können und daß der Piezoantrieb nahezu frei von elektrischer Verlustleistung betätigt werden kann. Durch die kleine Bauform von Piezoteilen wird der Totraum der Ventile noch weiter reduziert.

Ein Ausführungsbeispiel der Erfindung wird anhand einer Zeichnung schematisch dargestellt und im folgenden näher erläutert.

Es zeigen
- Figur 1: einen Sensor mit einer Ventileinrichtung und einem Meßwertkomparator,
- Figur 2: die Darstellung eines Kennlinienfeldes des Sensors aus Figur 1,
- Figur 3: den Sensor nach Figur 1 mit einer Kompensatorschaltung,
- Figur 4: die Draufsicht auf den Sensor mit einer verschiebbaren Blende über seiner Diffusionsöffnung.

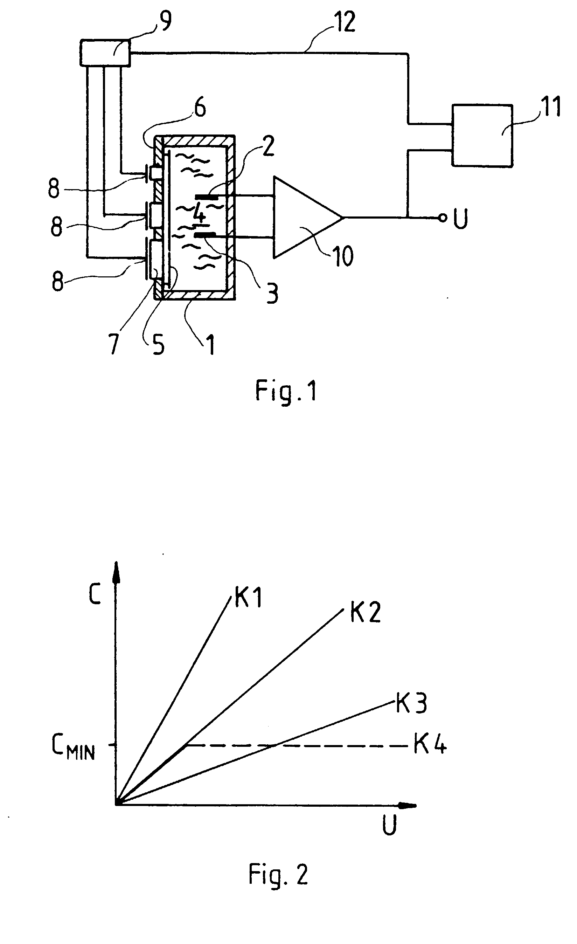

Ein elektrochemischer Sensor (1) mit einer Meßelektrode (2) und einer Gegenelektrode (3) in einer mit einem Elektrolyten gefüllten Elektrolytkammer (4) besitzt auf der der Umgebung zugewandten Fläche eine Diffusionsmembran (5), welche mit einer Diffusionssperre (6) abgedeckt ist. Die Diffusionssperre (6) besitzt mehrere Diffusionsöffnungen (7), welche als Krater eines Ventils ausgebildet sind, die jeweils mit einem ihnen zugeordneten Ventilteller (8) bedeckt sind. Die Diffusionsöffnungen (7) haben unterschiedliche Öffnungsquerschnitte, denen die Ventilteller (8) angepaßt sind. Die Ventilteller (8) sind über nicht dargestellte Magnetventilantriebe gesteuert und erhalten die Steuerungsimpulse von einem Ventilantrieb (9). Das Meßsignal des Sensors (1) wird von seiner Meßelektrode (2) und Gegenelektrode (3) zu einem Meßverstärker (10) geleitet und zu einem Meßsignal (U) verarbeitet. Der Signalausgang (U) wird einem Komparator (11) zugeführt und mit einem im Komparator (11) festgelegten Grenzwert verglichen. Bei Überschreiten oder Unterschreiten dieses Grenzwertes wird über eine Steuerleitung (12) der Ventilantrieb (9) angesteuert und zur Betätigung eines entsprechenden Ventiltellers (8) zum Öffnen oder Schließen der zugehörigen Diffusionsöffnung (7) veranlaßt. In dem Komparator können mehrere verschiedene Grenzwerte gespeichert sein, bei deren Durchschreitung die Ansteuerung eines oder mehrerer Ventilteller (8) jeweils getrennt oder in Kombination mit anderen geöffnet oder geschlossen werden, damit der Sensor (1) den in der Umgebung vorliegenden Konzentrationsverhältnissen für das nachzuweisende Gas angepaßt werden kann. Je nach Öffnungsstellung der Ventile (7, 8) besitzt der Sensor eine andere Kennlinie (K1,K2,K3) wie sie in Figur 2 dargestellt sind. So entspricht die Kennlinie (K1) der Empfindlichkeit des Sensors 1 bei geöffneter kleinster Diffusionsöffnung (7), wobei die beiden anderen geschlossen sind. Die Kennlinie (K2) entspricht der Empfindlichkeit des Sensors (1), wenn die kleinste und die mittlere Diffusionsöffnung (7) geöffnet sind, und die Kennlinie (K3), wenn alle drei geöffnet sind. Je nach vorliegender Konzentration wird durch den Vergleich des Meßsignals (U) am Komparator (11) mit einem dazugehörigen Grenzwert festgelegt, welches der Ventile (7, 8) geöffnet oder geschlossen werden muß, um den erforderlichen Meßbereich einzuhalten. Entsprechend wechselt der Arbeitspunkt des Sensors (1) von einer Kennlinie zur anderen. Hohe Konzentrationen werden somit längs der Kennlinie (K1) gemessen, niedrige Konzentrationen längs der Kennlinie (K3).

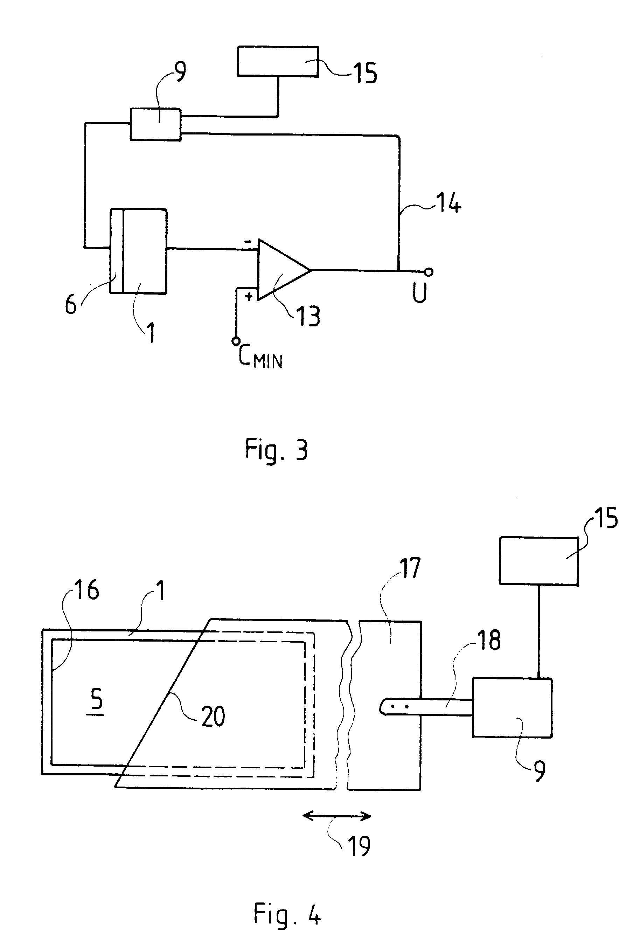

In Figur 3 ist der Sensor (1) mit seiner Diffusionssperre (6) in einem Kompensationsschaltkreis eingebunden, indem sein Meßsignal an dem invertierenden Eingang eines Operationsverstärkers (13) angeschlossen wird, an dessen nicht invertierenden Eingang ein konstantes Spannungssignal repräsentativ für eine einzuhaltende Mindestkonzentration C_{MIN} dargestellt ist. Der Ausgang des Operationsverstärkers (13) ist über eine Rückkopplungsleitung (14) an den Ventilantrieb (9) angeschlossen. Bei Abweichen des Signals aus dem Sensor (1) am invertierenden Eingang des Operationsverstärkers (13) von dem vorgegebenen Mindestkonzentrationswert gibt der Operationsverstärker (13) ein Steuersignal an den Ventilantrieb (9) ab, der je nach Vorzeichen des Steuersignals die Diffusionsöffnung der Diffusionssperre (6) verkleinert (bei positiver Abweichung) oder vergrößert (bei negativer Abweichung des Sensorsignals von dem Mindestkonzentrationswert C_{MIN}). Eine an den Ventilantrieb (9) angeschlossene Anzeigeeinheit (15) gibt den Öffnungsgrad der Diffusionssperre (6) an und ihre Anzeige kann direkt als ein Maß für die vorherrschende Konzentration an nachzuweisendem Gas angesehen werden. Bei der Schaltungsanordnung nach Figur 3 wird bei einer angenommenen Konzentration von nachzuweisendem Gas der Sensor (1) entsprechend der Kennlinie (K2) nach Figur 2 betrieben. Der am Operationsverstärker (13) wirksame Mindestkonzentrationswert C_{MIN} gibt eine obere Grenze für den Kennlinienverlauf des Sensors (1) an, der auf der Kennlinie (K2) von dem Nullpunkt des Koordinatensystems (C, U) bis zur Grenze C_{MIN} dick ausgeführt ist. Hat der Sensor (1) die Sensorspannung (U) erreicht, die dem Mindestkonzentrationswert C_{MIN} entspricht, führt jede weitere Erhöhung der Sensorspannung (U) nicht zu einer weiteren Erhöhung des Konzentrationswertes entlang der Kennlinie (K2), sondern sie bleibt bei C_{MIN} stehen. Der konstante Verlauf der Kennlinie (K4) wird dadurch erreicht, daß der Ventilantrieb (9) die Diffusionssperre (6) derart beeinflußt, daß die Diffusionsöffnungen nur noch so viel nachzuweisendes Gas hindurchlassen, wie zur Aufrechterhaltung des Mindestkonzentrationswertes C_{MIN} nötig ist.

In Figur 4 besitzt die Diffusionssperre lediglich eine einzige, die Membran (5) freihaltende Öffnung (16) im Gehäuse des Sensors (1). Die Diffusionsöffnung (16) fällt in diesem Falle mit der Gehäuseöffnung des Sensors (1) zusammen. Als Diffusionsventil ist eine Blende (17) vorgesehen, welche an dem Ventilantrieb (9) über eine Linearführung (18) verbunden ist. Die Position der Linearführung (18) wird über die Anzeigeeinheit (15) dargestellt, so daß sie ein direktes Maß für die Konzentration des nachzuweisenden Gases gibt. Die Beschaltung des Sensors (1) nach der Figur 4 kann entweder nach dem Schema entsprechend Figur 1 oder entsprechend Figur 3 erfolgen und ist in Figur 4 nicht noch einmal wiederholt. Je nach Überschreiten oder Unterschreiten eines Vergleichswertes im Komparator (11) oder eines Mindestkonzentrationswertes C_{MIN} am Operationsverstärker (13) wird die Blende (17) durch den Ventilantrieb (9) in beide Richtungen des Richtungspfeils (19) mehr oder weniger weit hin und her geschoben. Entsprechend wird die Diffusionsöffnung (16) freigegeben. Die Blende (17) liegt dichtend auf dem Rand des Gehäuses des Sensors (1) auf, und ihre über der Membran (5) streichende Kante (20) ist abgeschrägt, um im Bereich kleiner Öffnungsquerschnitte der Diffusionsöffnung (16) eine möglichst hohe Empfindlichkeit in bezug auf die Linearbewegung der Linearführung (18) und der freiwerdenden Diffusionsöffnung (16) im Bereich kleiner Öffnungsquerschnitte zu ermöglichen.

## Patentansprüche

1. Meßgerät zum Nachweis von Gasen mit Hilfe eines elektrochemischen Sensors, dessen Elektrolytkammer mit ihren Meßelektroden gegenüber der Umgebung mit einer Diffusionsmembran abgeteilt ist, welcher eine mit mindestens einer in ihrer Durchlässigkeit veränderbaren Diffusionsöffnung versehene Diffusionssperre vorgelagert ist, dadurch gekennzeichnet, daß mehrere Diffusionsöffnungen (7) vorgesehen sind, die mit einer ihnen zugeordneten Ventileinrichtung (8) gleichzeitig mehr oder weniger verschließbar sind, die zur Veränderung der Arbeitsposition des jeweiligen zu betätigenden Ventils (7, 8) über einen Ventilantrieb (9) an einen Meßwertkomparator (11) angeschlossen ist.

2. Meßgerät nach Anspruch 1, dadurch gekennzeichnet, daß der Komparator (11) einen Sollwertgeber (13) enthält, der in Rückkopplungsschaltung (14) mit dem Ventilantrieb (9) verbunden ist.

3. Meßgerät nach Anspruch 1 oder 2, dadurch gekennzeichnet, daß die Öffnungen als Ventilsitze (7) unterschiedlichen Querschnitts ausgebildet sind, von denen jedes für sich mittels eines von dem Ventilantrieb (9) getrennt ansteuerbaren Ventilteller (8) verschließbar ist.

4. Meßgerät nach Anspruch 3, dadurch gekennzeichnet, daß die Ventilteller als ein aus Piezokeramik hergestelltes Verschlußelement (8) ausgebildet sind, an das ein elektrischer Piezoantrieb (9) als Ventilantrieb angeschlossen ist.

5. Meßgerät zum Nachweis von Gasen mit Hilfe eines elektrochemischen Sensors, dessen Elektrolytkammer mit ihren Meßelektroden gegenüber der Umgebung mit einer Diffusionsmembran abgeteilt ist, welcher eine mit mindestens einer in ihrer Durchlässigkeit veränderbaren Diffusionsöffnung versehene Diffusionssperre vorgelagert ist, dadurch gekennzeichnet, daß die einzige Diffusionsöffnung (16) durch eine vor dieser durch den Ventilantrieb (9) verschiebbar angeordnete Blende (17) abdeckbar und kontinuierlich veränderbar ist, wobei zur Veränderung der Arbeitsposition der Blende der Ventilantrieb an einen komparator angeschlossen ist.

## Claims

1. Measuring apparatus for detecting gases with the aid of an electrochemical sensor, the electrolyte chamber of which, together with its measuring electrodes, is divided off with respect to the surroundings by means of a diffusion membrane, in front of which is positioned a diffusion barrier which is provided with at least one diffusion opening which can be altered in terms of its permeability, characterised in that there is provided a plurality of diffusion openings (7), which can be simultaneously closed to a greater or lesser extent with a valve device (8) which is allocated to said valve openings and is connected to a measured-value comparator (11) by way of a valve actuator (9) in order to alter the working position of the respective valve (7, 8) which is to be actuated.

2. Measuring apparatus according to claim 1, characterised in that the comparator (11) contains a desired-value transmitter (13), which is connected to the valve actuator (9) in a feedback circuit (14).

3. Measuring apparatus according to claim 1 or 2, characterised in that the openings are formed as valve seats (7) having different cross sections, of which valve seats each can be closed individually by means of a valve disc (8), which can be controlled separately by the valve actuator (9).

4. Measuring apparatus according to claim 3, characterised in that the valve discs are formed as a closing element (8) produced from piezo ceramics, to which closing element is connected an electric piezo actuator (9) as a valve actuator.

5. Measuring apparatus for detecting gases with the aid of an electrochemical sensor, the electrolyte chamber of which, together with its measuring electrodes, is divided off with respect to the surroundings by means of a diffusion membrane, in front of which is positioned a diffusion barrier which is provided with at least one diffusion opening which can be altered in terms of its permeability, characterised in that the single diffusion opening (16) can be covered and continuously altered by a screen (17), which is arranged in front of said opening (16) such that it can be shifted by the valve actuator (9), with the valve actuator being connected to a comparator in order to alter the working position of the screen.

## Revendications

1. Appareil de mesure pour la détection de gaz au moyen d'un capteur électrochimique, dont la chambre à électrolyte, avec ses électrodes de mesure, est séparée de l'atmosphère à l'aide d'une membrane de diffusion, en amont de laquelle est placée une barrière de diffusion pourvue d'une ouverture de diffusion dont on peut modifier la perméabilité, caractérisé en ce que sont prévues plusieurs ouvertures de diffusion (7) qui peuvent être plus ou moins fermées, simultanément, au moyen d'un dispositif formant soupape (8) qui leur est associé, qui sont reliées à un comparateur de valeurs de mesure (11), par l'intermédiaire d'une commande de soupape (9), pour modifier la position de travail de la soupape (7, 8) à actionner.

2. Appareil de mesure selon la revendication 1, caractérisé en ce que le comparateur (11) comporte un indicateur de valeur de consigne (13), qui est relié à la commande de soupape (9) selon un montage à réaction (14).

3. Appareil de mesure selon la revendication 1 ou 2, caractérisé en ce que les ouvertures sont conformées en sièges de soupape (7) de sections transversales différentes, dont chacun est susceptible d'être fermé, individuellement, au moyen d'une tête de soupape (8) pouvant être commandée séparément par la commande de soupape (9).

4. Appareil de mesure selon la revendication 3, caractérisé en ce que les têtes de soupape sont conformées en élément de fermeture (8) en céramique piézoélectrique, auquel est raccordé une commande piézoélectrique (9) servant de commande de soupape.

5. Appareil de mesure pour la détection de gaz au moyen d'un capteur électrochimique, dont la chambre à électrolyte, avec ses électrodes de mesure, est séparée de l'atmosphère à l'aide d'une membrane de diffusion, en amont de laquelle est placée une barrière de diffusion pourvue d'une ouverture de diffusion dont on peut modifier la perméabilité, caractérisé en ce que l'unique ouverture de diffusion (16) est susceptible d'être recouverte et d'être modifiée de façon continue par un cache (17) monté devant celle-ci et déplaçable par la commande de soupape (9), la commande de soupape étant raccordée à un comparateur pour modifier la position de travail du cache.
